# EUROPÄISCHE PATENTSCHRIFT

(11) **EP 1 831 786 B1**
(45) Veröffentlichungstag und Bekanntmachung des Hinweises auf die Patenterteilung: **23.03.2011**
(21) Anmeldenummer: 05807772.8
(22) Anmeldetag: 11.11.2005
(51) Int. Cl.: G06F 9/46, G06F 9/48

(54) **VERFAHREN ZUR VERTEILUNG VON RECHENZEIT IN EINEM RECHNERSYSTEM**
METHOD FOR DISTRIBUTING COMPUTING TIME IN A COMPUTER SYSTEM
PROCEDE POUR DISTRIBUER UN TEMPS DE CALCUL DANS UN SYSTEME INFORMATIQUE

(30) Priorität: 11.11.2004 DE 102004054571
(43) Veröffentlichungstag der Anmeldung: 12.09.2007
(73) Patentinhaber: Sysgo AG, 55270 Klein-Winternheim (DE)
(72) Erfinder: KAISER, Robert, 65195 Wiesbaden (DE); FUCHSEN, Rudolf, 55271 Stadecken-Elsheim (DE)
(74) Vertreter: Feldkamp, Rainer
(86) Internationale Anmeldenummer: PCT/EP2005/012104
(87) Internationale Veröffentlichungsnummer: WO 2006/050967

(56) Entgegenhaltungen:
- EP-A- 1 286 264
- US-A- 5 745 778
- DATABASE INSPEC [Online] THE INSTITUTION OF ELECTRICAL ENGINEERS, STEVENAGE, GB; 1998, TERRASA A ET AL: "Extending RT-Linux to support flexible hard real-time systems with optional components" XP002366057 Database accession no. 6174825 & PROCEEDINGS OF ACM SIGPLAN 1998 WORKSHOP ON LANGUAGES, COMPILERS, AND TOOLS FOR EMBEDDED SYSTEMS (IN CONJUNCTION W/PLDI'98) 19-20 JUNE 1998 MONTREAL, QUE., CANADA, Juni 1998 (1998-06), Seiten 41-50, Languages, Compilers, and Tools for Embedded Systems. ACM SIGPLAN Workshop LCTES'98. Proceedings Springer-Verlag Berlin, Germany ISBN: 3-540-65075-X
- TERRASA A ET AL: "Real-time synchronization between hard and soft tasks in RT-Linux" REAL-TIME COMPUTING SYSTEMS AND APPLICATIONS, 1999. RTCSA '99. SIXTH INTERNATIONAL CONFERENCE ON HONG KONG, CHINA 13-15 DEC. 1999, LOS ALAMITOS, CA, USA,IEEE COMPUT. SOC, US, 13. Dezember 1999 (1999-12-13), Seiten 434-441, XP010365387 ISBN: 0-7695-0306-3

## Beschreibung

Die Erfindung bezieht sich auf ein Verfahren zur Verteilung von Rechenzeit in einem Rechnersystem der im Oberbegriff des Anspruchs 1 genannt

Das erfindungsgemäße Verfahren ist insbesondere auf Rechnersysteme anwendbar, die mehrere Aufgaben in Form konkurrierender Teilprozesse oder "Threads" bearbeiten. Als "Thread" wird in diesem Zusammenhang eine Aktivität, bzw. ein in Ausführung befindliches Programm bezeichnet. Hierfür sind auch die Begriffe 'Task' oder 'Prozess' gebräuchlich, die jedoch je nach Kontext implizit Annahmen über weitere Eigenschaften wie zum Beispiel den Adressraum in dem das Programm abläuft, mit einschließen. Diese weiteren Eigenschaften sind für die vorliegende Erfindung jedoch ohne Bedeutung.

Welcher Thread wann zur Ausführung gelangt, d.h. welchem Thread Rechenzeit bzw. ein Prozessor zugeteilt wird, bestimmt ein Zuteilungsprozess, der üblicherweise als "Scheduler" bezeichnet wird. Der Scheduler ist damit ein Algorithmus, der entscheidet, welcher Thread wann zur Ausführung gelangt.

In einem derartigen Rechnersystem, in dem mehrere, voneinander unabhängige Aufgaben in Form von Threads abgearbeitet werden, kann ein Thread verschiedene Zustände annehmen:
rechnend: Der Thread hat einen Rechenzeitbedarf und befindet sich in Ausführung, d.h. ihm wurde ein Prozessor zugeteilt.
rechenwillig Der Thread ist bereit zur Ausführung und hat damit Rechenzeitbedarf und wartet darauf, dass ihm ein Prozessor zugeteilt wird.
blockiert Der Thread ist nicht bereit zur Ausführung, er wartet auf ein externes Ereignis.

Ein Thread geht aktiv vom Zustand rechnend in den Zustand blockiert über, indem er einen entsprechenden Aufruf an das Betriebssystem vornimmt. Der Wechsel von blockiert zu rechenwillig geschieht durch den Eintritt des externen Ereignisses oder auf Veranlassung eines anderen Thread, der dazu einen entsprechenden Systemaufruf vornimmt. Damit ein rechenwilliger Thread rechnend werden kann, muss ihm vom Scheduler einer der verfügbaren Prozessoren zugeteilt werden. Immer dann, wenn ein Thread entweder
aus dem Zustand rechnend in den Zustand blockiert, oder
aus dem Zustand blockiert in den Zustand rechenwillig wechselt,
wird der Scheduler aufgerufen, um entweder den frei werdenden Prozessor einem neuen rechenbereiten Prozess zuzuteilen, oder um einem der rechnenden Threads den Prozessor zu entziehen, falls der rechenwillig werdende Thread als wichtiger eingestuft wird.

Aus Sicht des Schedulers existiert eine Anzahl rechenwilliger Threads, die um die Zuteilung eines Prozessors konkurrieren. Es wird hier davon ausgegangen, dass die Anzahl verfügbarer Prozessoren im allgemeinen kleiner als die Anzahl rechenbereiter Threads ist, d.h. der Scheduler findet normalerweise mehr 'Bewerber' um einen Prozessor vor, als er Prozessoren zu vergeben hat.

Es ist eine Vielzahl von Vorgehensweisen bekannt, wie mit Hilfe des Schedulers festgelegt wird, welchem Thread zum einem jeweiligen Zeitpunkt ein Prozessor zugeteilt wird.

Bei einem ersten Verfahren, das als Prioritätsverfahren bekannt ist, werden den einzelnen Threads Prioritäten zugeordnet. Ein Thread höherer Priorität erhält den Vorzug gegenüber einem Thread niedrigerer Priorität. Threads gleicher Priorität sind je nach Anforderung entweder nicht zulässig, oder sie werden in der Reihenfolge, in der sie rechenwillig werden, in eine Warteschlange eingereiht. Die Priorität der einzelnen Threads kann je nach Anforderungen sowohl statisch festgelegt als auch dynamisch ermittelt und fortlaufend nachgeführt werden.

Beim Prioritätsverfahren besteht keine Möglichkeit, einem Thread ein Rechenzeitkontingent zu garantieren: eine hohe Priorität aufweisende Threads können die Prozessoren beliebig lange belegen und es kann im Extremfall vorkommen, dass eine niedrige Priorität aufweisende Threads niemals rechnend werden.

In einem weiteren Verfahren, das auch als Zeitscheibenverfahren (round robin) bekannt ist, wird die Zeitdauer, für die ein Thread einen Prozessor nutzen darf, begrenzt. Sobald ein gerade arbeitender Thread den ihm zugewiesenen Prozessor für mehr als eine festgelegte Dauer genutzt hat (d.h. er seine 'Zeitscheibe verbraucht' hat), wird er zwangsweise unterbrochen. Der Thread bleibt dabei rechenwillig und wird am Ende einer Warteschlange eingereiht. Die Dauer der Zeitscheibe kann je nach Anforderungen eine Konstante oder eine Threadspezifische Variable sein. Dieses Verfahren erfordert einen externen Zeitgeber, der in bestimmten Zeitabständen über einen Interrupt das Betriebssystem aktiviert, damit dieses die vom laufenden Thread verbrauchte Zeit überwachen und ggf. den Scheduler aktivieren kann.

Das Zeitscheibenverfahren ermöglicht die Kontingentierung von Rechenzeit, doch es erlaubt keine schnelle Reaktion auf externe Ereignisse: Ein Thread, der z.B. aufgrund eines Interrupts rechenwillig wird, muss im ungünstigsten Fall den gesamten Zyklus, d.h. die Zeitscheiben sämtlicher anderer rechenwilliger Threads abwarten, bevor er rechnend werden kann.

Bei vielen Rechnersystemen, insbesondere bei Rechnersystemen mit einer Anzahl von Threads, von denen einige Echtzeitanforderungen unterliegen, müssen jedoch zumindest diese "Echtzeit-Threads" innerhalb einer garantierten und idealerweise möglichst kurzen Maximalzeit auf externe Ereignisse reagieren, d.h. rechnend werden können. Zugleich existieren Threads, die zur Verrichtung ihrer jeweiligen Tätigkeiten ein Mindestkontingent an Rechenzeit benötigen. Auch ein solches Zeitkontingent für Threads muss garantiert werden können. Entsprechend sind Kombinationen der vorstehend genannten Verfahren bekannt.

Bei einem aus der EP-A2-0658 841 bekannten Verfahren werden Gruppen von Threads Prioritäten zugeordnet, und innerhalb der Gruppen wird den einzelnen Threads Rechenzeit in einem Zeitscheibenverfahren zugeteilt.

Bei einem weiteren aus der EP-A2-880 059 bekannten Verfahren werden die Threads in Klassen gruppiert, die in eine Hierarchie eingeordnet werden. Jede Klasse hat einen Zeitfunktionswert, der bestimmt, wann der Klasse Rechenzeit zugeteilt wird. Innerhalb einer Ebene der Hierarchie werden Rechenzeit-Prioritäten durch eine oder mehrere zeitbasierte Funktionen definiert, die konstant sein können oder sich dynamisch ändern.

Aus der Veröffentlichung DATABASE INSPECT [Online] THE INSTITUTION OF ELECTRICAL ENGINEERS, STEVENAGE, GB; 1998 TERRASA et al; "Extending RT Linux to support flexible hard real-time Systems with optional components", XP002366057 Database accession no. 6174825, ist weiterhin ein in den Kern ladbares Echtzeit-Modul bekannt, das Befehle definiert, die jeweilige mit Threads vergleichbare Tasks in einen Anfangsteil, einen optionalen Teil und einen Endteil unterteilen, von denen die Endteile eine hohe Priorität aufweisen und immer ausgeführt werden. Bei der Ausführung der Anfangs- und Endteile wird eine sogenannte "Slack"-Zeit berechnet, die die Differenz zwischen der dem jeweiligen Teil zur Verfügung stehenden Zeit und der tatsächlich benötigten Zeit darstellt. Diese "Slack"-Zeit wird dann dem optionalen Teil zur Verfügung gestellt.

Der Erfindung liegt die Aufgabe zugrunde, ein Verfahren der eingangs genannten Art zu schaffen, das verlässliche Zusagen über die einzelnen Threads zustehende Rechenzeit erlaubt, und bei dem zugesagte, dann aber nicht in Anspruch genommene Rechenzeit dynamisch umverteilt werden kann.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen

Erfindungsgemäß wird ein Verfahren zur Verteilung von Rechenzeit in einem Rechnersystem geschaffen, auf dem eine Anzahl von Teilprozessen oder "Threads" (N0, S0, P0, W1, W2) abläuft, denen ein Zuteilungsprozess oder "Scheduler" bei Bedarf Rechenzeit zuteilt, wobei einzelnen Threads (N0, S0, P0, W1, W2) Prioritäten zugeordnet werden und die Zuteilung von Rechenzeit in Abhängigkeit von den jeweiligen Prioritäten erfolgt.

Das erfindungsgemäße Verfahren ist dadurch gekennzeichnet,
dass ein erster Scheduler (Partitions-Scheduler) einer Anzahl von Zeitpartitionen (Tau0 Tau1, Tau2) jeweils eine Zeitscheibe zuordnet und jeweils eine der Zeitpartitionen für die Dauer ihrer Zeitscheibe aktiviert,
dass die einzelnen Threads (N0, S0, P0, W1, W2) jeweils einer Zeitpartition (Tau0, Tau1, Tau2) der Anzahl von Zeitpartitionen (Tau0, Tau1, Tau2) zugeordnet werden,
dass eine erste (Tau0) der Zeitpartitionen Threads (N0, S0, P0) enthält, denen bei Bedarf zu jeder Zeit Rechenzeit zugeteilt wird,
dass ein zweiter Scheduler (Thread-Scheduler) die Threads der ersten Zeitpartition (Tau0) überwacht und die Threads der jeweiligen aktivierten Zeitpartition überwacht und diesen
Threads in Abhängigkeit von ihren Prioritäten Rechenzeit zuweist,
dass der zweite Scheduler (Thread-Scheduler) immer dann aufgerufen wird, wenn der Zustand eines Threads, der der geraden aktiven oder der ersten Zeitpartition zugeordnet ist, von rechnend nach blockiert wechselt, oder wenn ein zuvor blockierender Thread den Zustand rechenwillig annimmt;
dass nach dem Aufruf des zweiten Schedulers dieser die höchsten Prioritäten sowohl der gerade aktiven Zeitpartition als auch der Hintergrundpartition ermittelt;
dass der die höchste Priorität aufweisende Thread der gerade aktiven Zeitpartition in den Zustand rechnend überführt wird, wenn die Maximalpriorität der gerade aktiven Zeitpartition über der der Hintergrundpartition liegt, während anderenfalls der die höchste Priorität aufweisende Thread der Hintergrundpartition in den Zustand rechnend überführt wird;
so dass eine niedrige Priorität aufweisende Threads der ersten Zeitpartition (Tau0) zusätzlich Rechenzeit der jeweils aktivierten weiteren Zeitpartition (Tau1, Tau2) erhalten, wenn die weitere Zeitpartition (Tau1, Tau2) keine einen Rechenzeitbedarf aufweisenden Threads enthält.

Gemäß einer Ausgestaltung der Erfindung ist der erste Scheduler ein Thread der ersten Zeitpartition.

Der erste Scheduler kann als Endlosschleife implementiert sein und eine hohe Priorität aufweisen,

Der zweite Scheduler wird immer dann aufgerufen, wenn ein Thread Rechenzeitbedarf anmeldet oder aufgibt.

Bei dem erfindungsgemäßen Verfahren kann damit sichergestellt werden, dass durch den Aufruf des zweiten Schedulers immer dann, wenn ein Thread Rechenzeitbedarf anmeldet oder aufgibt, die Reaktionszeit von Threads auf externe Ereignisse stets unterhalb einer zugesicherten Maximalzeit liegt.

Die Erfindung wird nachfolgend anhand von in der Zeichnung dargestellten Ausführungsbeispielen noch näher erläutert.

In der Zeichnung zeigen:
Figur 1 ein Ausführungsbeispiel eines Flussdiagramms des ersten (Zeitpartitions-) Schedulers gemäß der Erfindung:
Figur 2 ein Ausführungsbeispiel eines Flussdiagramms des zweiten (Thread-) Schedulers gemäß der Erfindung:
Figur 3 eine Darstellung eines Beispiels für einen Schedulingablauf.

Das erfindungsgemäße Verfahren kombiniert die Eigenschaften des Zeitscheiben- und des Prioritätsverfahrens. Wie beim Prioritätsverfahren besitzen die Threads eine Priorität als Attribut. Zusätzlich wird jeder rechenwillige Thread einer jeweiligen Zeitpartition zugeordnet. Eine Zeitpartition bezeichnet somit eine Menge von rechenwilligen Threads mit im Allgemeinen unterschiedlicher Priorität.

Es existiert eine spezielle erste Zeitpartition, die sogenannte Hintergrundpartition. Die Threads, die der Hintergrundpartition zugeordnet sind, können zu jeder Zeit rechnend werden. Für alle übrigen Zeitpartitionen gilt, dass die ihnen zugeordneten Threads immer nur dann rechnend werden können, wenn die betreffende Zeitpartition 'aktiv' ist, wobei zu jeder Zeit neben der Hintergrundpartition maximal eine weitere Zeitpartition aktiv sein kann.

Das Verfahren verwendet zwei überlagerte Scheduler: Ein erster, als Zeitpartitions-Scheduler bezeichneter, Scheduler ordnet den verschiedenen Zeitpartitionen jeweils eine Zeitscheibe zu und aktiviert je eine der Zeitpartitionen für die Dauer ihrer Zeitscheibe. Ein zweiter, als Thread-Scheduler bezeichneter, Scheduler betrachtet die Vereinigungsmenge der Threads der Hintergrundpartition und der derzeit aktiven Partition und weist den die höchste Priorität aufweisenden Threads aus dieser Menge die verfügbaren Prozessoren zu.

Die Threads der Hintergrundpartition haben, abhängig von ihrer Priorität verschiedene Funktion:
1. Eine hohe Priorität aufweisende Threads der Hintergrundpartition können Dienste implementieren, die von Threads verschiedener anderer Zeitpartitionen gemeinsam genutzt werden sollen. Darüber hinaus können solche Threads Aufgaben des Betriebssystems übernehmen, wie zum Beispiel die Überwachung anderer Threads oder des Zustandes des Gesamtsystems. Insbesondere kann der Zeitpartitions-Scheduler selbst als Thread der Hintergrundpartition realisiert werden.
2. Eine niedrigere Priorität aufweisende Threads der Hintergrundpartition erhalten dann Rechenzeit, wenn die derzeit aktive Zeitpartition keine rechenwilligen Threads besitzt, d.h. wenn die ihr zugeordneten Threads das ihnen zugesagte Zeitkontingent nicht in Anspruch nehmen, zum Beispiel, weil sie auf externe Ereignisse warten müssen. Es besteht damit die Möglichkeit, zugesagte und dann doch nicht in Anspruch genommene Rechenzeit einer sinnvollen Nutzung zuzuführen.

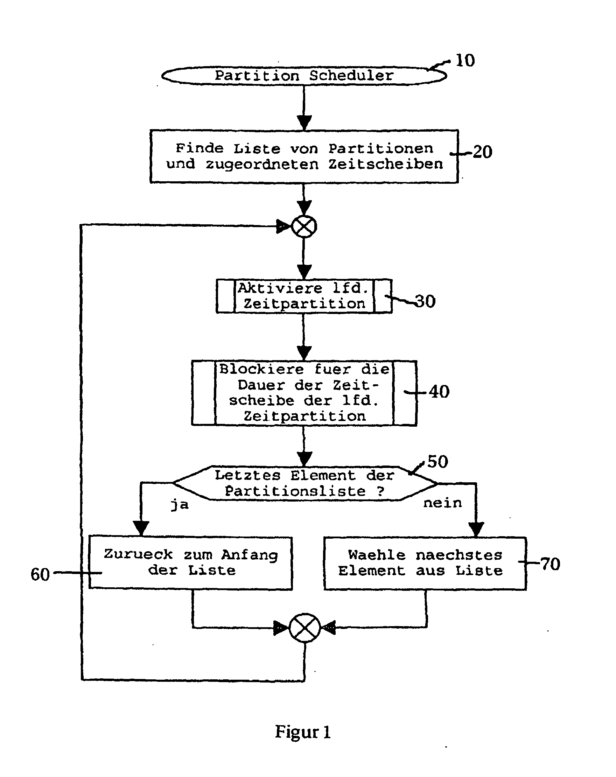

In Figur 1 ist die Arbeitsweise eines Zeitpartitions-Schedulers 10 an einem typischen Beispiel veranschaulicht. Hierbei wird angenommen, dass die Zeitpartitionen des Systems zyklisch, jeweils für eine definierte Zeitscheibendauer aktiviert werden sollen. Der Zeitpartitions-Scheduler ist in diesem Beispiel als Endlosschleife implementiert, die als Thread hoher Priorität innerhalb der Hintergrundpartition läuft. Der Thread liest im Schritt 20 eine Liste von Zeitpartitionen mit den zugehörigen Zeitscheibendauern. Für jedes Listenelement wird zunächst die bezeichnete Zeitpartition im Schritt 30 aktiviert und anschließend blockiert der Thread im Schritt 40 für die Dauer der Zeitscheibe der soeben aktivierten Zeitpartition. Im Schritt 50 wird geprüft, ob das Ende der Liste erreicht ist. Wenn das Ende der Liste noch nicht erreicht ist, so wird im Schritt 70 das nächste Element aus der Liste ausgewählt. Ist das Ende der Liste erreicht, so beginnt die Abarbeitung über den Schritt 60 wieder am Anfang

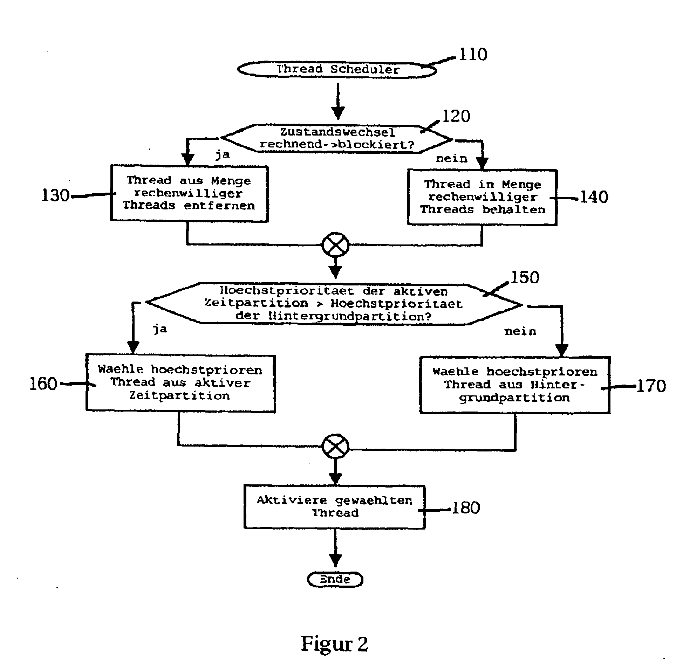

In Figur 2 ist ein Ausführungsbeispiel des Thread-Schedulers 110 gezeigt. Der Thread-Scheduler wird immer dann aufgerufen, wenn der Zustand eines Thread von rechnend nach blockiert wechselt, oder wenn ein zuvor blockierter Thread den Zustand rechenwillig annimmt (z.B. aufgrund eines externen Ereignisses), was im Schritt 120 festgestellt wird. Im erstgenannten Fall muss im Schritt 130 der neuerdings blockierte Thread aus der Menge rechenwilliger Threads der ihm zugeordneten Zeitpartition entfernt werden, während im zweitgenannten Fall im Schritt 140 alle derzeit rechnenden Threads rechenwillig bleiben. Anschließend werden im Schritt 150 die höchsten Prioritäten sowohl der gerade aktiven Zeitpartition als auch der Hintergrundpartition ermittelt. Liegt die Maximalpriorität der gerade aktiven Zeitpartition über der der Hintergrundpartition, so wird im Schritt 160 der die höchste Priorität aufweisende Thread dieser Zeitpartition in den Zustand rechnend überführt, anderenfalls wird im Schritt 170 der die höchste Priorität aufweisende Thread der Hintergrundpartition gewählt. Nachfolgend wird im Schritt 180 der ausgewählte Thread aktiviert.

Wenn die Maximalpriorität der gerade aktiven Zeitpartition gleich der Maximalpriorität der Hintergrundpartition ist, so wird in diesem Beispiel die Hintergrundpartition bevorzugt. In Abhängigkeit von den jeweiligen Anforderungen könnte hier ebensogut eine Bevorzugung der gerade aktiven Zeitpartition bewirkt werden.

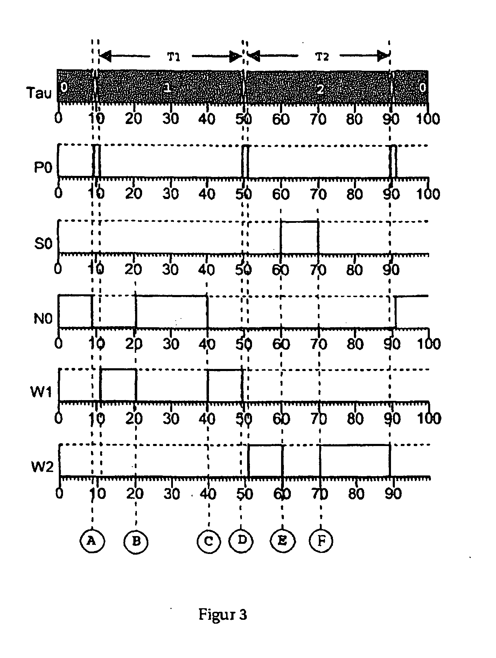

In Figur 3 ist ein Beispiel eines Scheduling-Ablaufs gezeigt. Diese Figur verdeutlicht anhand eines Beispieles die Funktionsweise des erfindungsgemäßen Verfahrens. In diesem Beispiel wird davon ausgegangen, dass nur ein Prozessor vorhanden ist. Es existieren zwei Zeitpartitionen Tau1 und Tau2 mit den Threads W1 und W2, zudem existiert die Hintergrundpartition Tau0. In Tau0 existiert ein Thread niedriger Priorität namens N0, ein Thread mittlerer Priorität namens S0, sowie ein Thread hoher Priorität namens P0.

P0 sei der Zeitpartitions-Scheduler gemäß Figur 1, d.h. dieser Thread wird jeweils für kurze Zeit rechnend, um die aktive Zeitpartition umzuschalten und blockiert anschließend jeweils für die Dauer der Zeitscheibe der aktiven Zeitpartition (iT1, bzw. T2 in Figur 3).

S0 sei ein von W1 und W2 gemeinsam genutzter 'Server', der auf Anforderung dieser Threads Dienste erbringt und ansonsten blockiert.

N0 sei ein ständig rechenwilliger Hintergrundthread, der niemals blockiert.

Im Beispiel ist zunächst keine der beiden Zeitpartitionen Tau1 bzw. Tau2 aktiv. Es existieren drei rechenwillige Threads: W1, W2 und N0. Da aber die Zeitpartitionen von W1 und W2 nicht aktiv sind, werden diese Threads trotz ihrer höheren Priorität nicht rechnend. In der Hintergrundpartition Tau0 ist N0 der einzige rechenwillige Thread (P0 und SO sind blockiert). Daher ist N0 zunächst rechnend. Zum Zeitpunkt A wird der Zeitpartitions-Scheduler P0 rechenwillig und zugleich rechnend, da seine Priorität über der von N0 liegt. P0 aktiviert die Zeitpartition Tau1 und blockiert anschließend für die Dauer T1. Da nun Tau1 aktiv ist, wird der dieser Zeitpartition zugeordnete Thread W1 rechenwillig, und, da seine Priorität über der von N0 liegt, wird er rechnend. Zum Zeitpunkt B blockiert W1 um ein externes Ereignis abzuwarten. Dieses Ereignis tritt zum Zeitpunkt C ein. Die Zeit zwischen den Zeitpunkten B und C war der Zeitpartition Tau1 zugesichert worden, jedoch gibt es keinen Tau1 zugeordneten Thread, der diese Zeit in Anspruch nehmen könnte. Deshalb wird diese ungenutzte Zeit N0 zugewiesen. Nach Ablauf der Zeitscheibe T1 der Partition Tau1 zum Zeitpunkt D wird der Zeitpartitions-Scheduler P0 rechnend. Er aktiviert die Zeitpartition Tau2 und blockiert anschließend für die Dauer T2. Da nun Tau2 aktiv ist, wird der dieser Zeitpartition zugeordnete Thread W2 rechnend. Zum Zeitpunkt E fordert W2 einen Dienst vom Server SO an und blockiert, um auf dessen Antwort zu warten. SO wird daraufhin rechenwillig, und, da seine Priorität über der von N0 liegt, rechnend. Zum Zeitpunkt F hat S0 die angeforderte Dienstleistung erbracht, sendet eine entsprechende Benachrichtigung an seinen Auftraggeber W2 und blockiert in Erwartung des nächsten Auftrags. W2 wird daraufhin wieder rechnend und arbeitet bis zum Ablauf der Zeitscheibe seiner Zeitpartition Tau2. An dieser Stelle wird der Zeitpartitions-Scheduler P0 wieder rechnend und aktiviert wieder die Hintergrundpartition Tau0. Damit herrschen wieder die gleichen Verhältnisse wie zu Beginn des Zyklus.

## Patentansprüche

1. Verfahren zur Verteilung von Rechenzeit in einem Rechnersystem, auf dem eine Anzahl von Teilprozessen oder "Threads" (N0, S0, P0, W1, W2) abläuft, denen ein Zuteilungsprozess oder "Scheduler" bei Bedarf Rechenzeit zuteilt, wobei einzelnen Threads (N0, S0, P0, W1, W2) Prioritäten zugeordnet werden und die Zuteilung von Rechenzeit in Abhängigkeit von den jeweiligen Prioritäten erfolgt, **dadurch gekennzeichnet,**
**dass** ein erster Scheduler (Partitions-Scheduler) einer Anzahl von Zeitpartitionen (Tau0, Tau1, Tau2) jeweils eine Zeitscheibe zuordnet und jeweils eine der Zeitpartitionen für die Dauer ihrer Zeitscheibe aktiviert,
**dass** die einzelnen Threads (N0, S0, P0, W1, W2) jeweils einer Zeitpartition (Tau0, Tau1, Tau2) der Anzahl von Zeitpartitionen (Tau0, Tau1, Tau2) zugeordnet werden,
**dass** eine erste (Tau0) der Zeitpartitionen Threads (N0, S0, P0) enthält, denen bei Bedarf zu jeder Zeit Rechenzeit zugeteilt wird,
**dass** ein zweiter Scheduler (Thread-Scheduler) die Threads der ersten Zeitpartition (Tau0) überwacht und die Threads der jeweiligen aktivierten Zeitpartition überwacht und diesen
Threads in Abhängigkeit von ihren Prioritäten Rechenzeit zuweist,
**dass** der zweite Scheduler (Thread-Scheduler) immer dann aufgerufen wird, wenn der Zustand eines Threads, der der geraden aktiven oder der ersten Zeitpartition zugeordnet ist, von rechnend nach blockiert wechselt, oder wenn ein zuvor blockierender Thread den Zustand rechenwillig annimmt;
**dass** nach dem Aufruf des zweiten Schedulers dieser die höchsten Prioritäten sowohl der gerade aktiven Zeitpartition als auch der ersten Zeitpartition (Tau0) ermittelt;
**dass** der die höchste Priorität aufweisende Thread der gerade aktiven Zeitpartition in den Zustand rechnend überführt wird, wenn die Maximalpriorität der gerade aktiven Zeitpartition über der der ersten Zeitpartition (Tau0) liegt, während anderenfalls der die höchste Priorität aufweisende Thread der ersten Zeitpartition (Tau0) in den Zustand rechnend überführt wird;
so dass eine niedrige Priorität aufweisende Threads der ersten Zeitpartition (Tau0) zusätzlich Rechenzeit der jeweils aktivierten weiteren Zeitpartition (Tau1, Tau2) erhalten, wenn die weitere Zeitpartition (Tau1, Tau2) keine einen Rechenzeitbedarf aufweisenden Threads enthält.

2. Verfahren nach Anspruch 1, **dadurch gekennzeichnet, dass** der erste Scheduler ein Thread der ersten Zeitpartition (Tau0) ist.

3. Verfahren nach einem der vorhergehenden Ansprüche, **dadurch gekennzeichnet, dass** der erste Scheduler als Endlosschleife implementiert ist und eine hohe Priorität aufweist.

4. Verfahren nach einem der vorhergehenden Ansprüche, **dadurch gekennzeichnet, dass** der zweite Scheduler immer dann aufgerufen wird, wenn ein Thread Rechenzeitbedarf anmeldet oder aufgibt.

5. Verfahren nach einem der vorhergehenden Ansprüche, **dadurch gekennzeichnet, dass** durch den Aufruf des zweiten Schedulers immer dann, wenn ein Thread Rechenzeitbedarf anmeldet oder aufgibt, die Reaktionszeit von Threads auf externe Ereignisse stets unterhalb einer zugesicherten Maximalzeit liegt.

## Claims

1. Method for distributing computation time in a computer system on which there is running a number of subprocesses or "threads" (N0, S0, P0, W1, W2) to which, if required, an allocation process or "scheduler" allocates computation time, individual threads (N0, S0, P0, W1, W2) being assigned priorities, and the allocation of computation time being performed as a function of the respective priorities, **characterized**
**in that** a first scheduler (partition scheduler) assigns to a number of individual time partitions (Tau0, Tau1, Tau2) a respective time slice, and activates one of the time partitions for the duration of its respective time slice,
**in that** the individual threads (N0, S0, P0, W1, W2) are assigned to a respective time partition (Tau0, Tau1, Tau2) of the number of time partitions (Tau0, Tau1, Tau2),
**in that** a first (Tau0) of the time partitions includes threads (N0, S0, P0) which are allocated computation time, if required , at any time,
**in that** a second scheduler (thread scheduler) monitors the threads of the first time partition (Tau0) and the threads of the respectively activated time partition, and allocates these threads computation time as a function of their priorities,
**in that** the second scheduler (thread scheduler) is invoked whenever the a thread assigned to the currently active time partition or to the first time partition changes its state from computing to blocked or when a previously blocking thread assumes the state of willing to compute;
**in that** the second scheduler determines on its invocation the highest priorities both of the currently active time partition and of the first partition (Tau0)**;**
**in that** the thread of the currently active time partition having the highest priority is transferred into the state of computing if the maximum priority of the currently active time partition is above that of the first partition (Tau0), while otherwise the thread of the first partition (Tau0) which has the highest priority is transferred into the state of computing;
such that threads of the first time partition (Tau0) which have a lower priority additionally obtain computation time of the respectively activated further time partitions (Tau1, Tau2) when the further time partitions (Tau1, Tau2) include no threads having a computation time requirement.

2. Method according to Claim1, **characterized in that** the first scheduler is a thread of the first time partition (Tau0).

3. Method according to one of the preceding claims, **characterized in** the first scheduler is implemented as an endless loop and has a high priority.

4. Method according to one of the preceding claims, **characterized in that** the second scheduler is always called up whenever a thread registers or relinquishes a computation time requirement.

5. Method according to one of the preceding claims, **characterized in that** by invoking the second scheduler whenever a thread registers or relinquishes a computation time requirement, the reaction time of threads to external events always lies below an assured maximum time.

## Revendications

1. Procédé pour distribuer du temps de calcul dans un système informatique sur lequel s'exécute une pluralité de sous-processus ou « threads » (N0, S0, P0, W1, W2) auxquels un processus d'attribution ou « scheduler » attribue du temps de calcul en cas de besoin, des priorités étant affectées aux différents threads (N0, S0, P0, W1, W2) et l'attribution de temps de calcul se faisant en fonction des priorités respectives, **caractérisé en ce**
**qu'**un premier scheduler (scheduler de partition) affecte à une pluralité de partitions temporelles (Tau0, Tau1, Tau2) une tranche de temps respective et active chacune des partitions temporelles pour la durée de sa tranche de temps,
**que** les différents threads (N0, S0, P0, W1, W2) sont affectés chacun à une partition temporelle (Tau0, Tau1, Tau2) de la pluralité de partitions temporelles (Tau0, Tau1, Tau2),
**qu'**une première (Tau0) des partitions temporelles contient des threads (N0, S0, P0) auxquels du temps de calcul est attribué à tout moment en cas de besoin,
**qu'**un deuxième scheduler (scheduler de threads) surveille les threads de la première partition temporelle (Tau0) et surveille les threads de la partition temporelle respectivement activée et
attribue du temps de calcul à ces threads en fonction de leurs priorités,
**que** le deuxième scheduler (scheduler de threads) est toujours appelé quand l'état d'un thread auquel est affectée la partition temporelle actuellement active ou la première partition temporelle passe de l'état « en exécution » à l'état « bloqué » ou quand un thread précédemment bloqué prend l'état « prêt » ;
**qu'**après l'appel du deuxième scheduler, celui-ci détermine les plus hautes priorités aussi bien de la partition temporelle actuellement active que de la première partition temporelle (Tau0) ;
**que** le thread qui présente la plus haute priorité de la partition temporelle actuellement active est mis dans l'état « en exécution » si la priorité maximale de la partition temporelle actuellement active est supérieure à celle de la première partition temporelle (Tau0), tandis que, dans le cas contraire, le thread de la première partition temporelle (Tau0) qui présente la plus haute priorité est mis dans l'état « en exécution » ;
de sorte que des threads de la première partition temporelle (Tau0) qui présentent une priorité plus basse reçoivent du temps de calcul supplémentaire de l'autre partition temporelle respectivement activée (Tau1, Tau2) quand cette autre partition temporelle (Tau1, Tau2) ne contient aucun thread présentant un besoin de temps de calcul.

2. Procédé selon la revendication 1, **caractérisé en ce que** le premier scheduler est un thread de la première partition temporelle (Tau0).

3. Procédé selon une des revendications précédentes, **caractérisé en ce que** le premier scheduler est implémenté sous la forme d'une boucle infinie et présente une priorité élevée.

4. Procédé selon une des revendications précédentes, **caractérisé en ce que** le deuxième scheduler est toujours appelé quand un thread signale ou abdique un besoin de temps de calcul.

5. Procédé selon une des revendications précédentes, **caractérisé en ce que** du fait que le deuxième scheduler est toujours appelé quand un thread signale ou abdique un besoin de temps de calcul, le temps de réaction des threads à des événements externes est toujours inférieur à un temps maximum garanti.
